# EUROPEAN PATENT SPECIFICATION

(11) **EP 1 555 875 B1**
(45) Date of publication and mention of the grant of the patent: **26.03.2008**
(21) Application number: 03767677.2
(22) Date of filing: 24.10.2003
(51) Int. Cl.: A01N 43/54

(54) **USE OF PYRIMETHANIL ON RESISTANT PATHOGENS**
VERWENDUNG VON PYRIMETHANIL GEGEN RESISTENTE PATHOGENE
UTILISATION DE PYRIMETHANIL SUR DES PATHOGENES RESISTANTS

(30) Priority: 24.10.2002 EP 02356209
(43) Date of publication of application: 27.07.2005
(73) Proprietor: Bayer CropScience S.A., 69009 Lyon (FR)
(72) Inventor: DUVERT, Patrice, F-69004 Lyon (FR); ARROYO HERRERA, T., Urban. Trejos Montealegre, 586-1260 Plaza Colonial (CR)
(86) International application number: PCT/EP2003/013339
(87) International publication number: WO 2004/036996

(56) References cited:
- EP-A- 0 556 157
- DE-A- 4 318 372
- FR-A- 2 732 191
- FR-A- 2 742 310
- FR-A- 2 744 333
- GB-A- 2 267 644
- MIGEON J -L ET AL: "Cyprodinil: A new way for cereal eyespot control three years of experimentation in France." MEDEDELINGEN FACULTEIT LANDBOUWKUNDIGE EN TOEGEPASTE BIOLOGISCHE, vol. 60, no. 28, 1995, pages 393-399, XP001118976 1995

## Description

The present invention relates to a particular use of pyrimethanil for combatting *Cercospora* diseases, which in particular affect banana crops and which have a certain degree of resistance to the fungicidal compounds which inhibit sterol synthesis in the fungi causing these diseases, in particular compounds of the triazole type.

*Cercospora* diseases affecting banana crops represent the major problem for these crops. Indeed, the negative impact of these diseases on these crops goes far beyond the problems associated with other diseases, but also the problems associated with other harmful pests, in particular damages due to insects or to weeds.

The consequences of these diseases are generally a large quantitative reduction in production of these crops, but also a decrease in the quality of the harvests. Thus, these diseases have a negative impact on the yield but also on the organoleptic qualities of the fruit harvested.

The specific climatic conditions present in the regions where these crops are usually produced, namely high humidity combined with high temperatures, result in a constant and intense development of these diseases.

As a result, the plants grown are subjected to a very strong pressure from the diseases requiring intensive use of antifungal controlling means which are effective on the fungi causing these diseases.

The consequence of this very broad use of fungicidal compounds on these plants and the constant nature of the strong pressure from these diseases on these same plants frequently leads to the development of phenomena of resistance to these fungicidal compounds on the part of the pathogenic organisms responsible for these *Cercospora* diseases.

Such resistance phenomena are well known to those skilled in the art and have possibly brought about a limitation in the number of treatments with some fungicidal agents. Mention may in particular be made of fungicidal compounds of the benzimidazole type or compounds which inhibit sterol synthesis in these pathogenic fungi, and more recently compounds which inhibit mitochondrial respiration; these compounds are usually referred to by the abbreviation Qoi.

Such resistance phenomena have also possibly led to the use of some of these products being stopped subsequent to them completely lacking any effectiveness for protecting these crops against these diseases.

J-L Migeon et al, Med. Fac. Landbouw. vol 60, no. 28, pp 393-399 describes the suitability of cyprodinyl on triazole-resistant fungi.

Among the compounds subject to such resistance phenomena, compounds which inhibit sterol synthesis lead to a gradual development of these phenomena which is closely related to the number of times these compounds are applied, annually, to the crops treated, and to the pressure from the disease in the field. Among these compounds, the most widely used are the compounds of the triazole type, such as bitertanol, difenoconazole, propiconazole or else tebuconazole.

Usually, such a development of these phenomena results in a gradual erosion of the efficacy of these known fungicidal compounds.

In the presence of such resistance phenomena, the user is led, or even forced, to turn to fungicidal products whose mode of action on the pathogenic fungi differs from that of the compounds subject to these resistances.

A solution may be to use compounds which have a new mode of action and which do not act on sterol synthesis in these fungi. In this case, the efficacy expected on both the fungi sensitive to and the fungi resistant to the compounds which inhibit sterol synthesis is comparable.

In such a case, the efficacy on the resistant fungi of a compound which inhibits sterol synthesis will be reduced, or even insufficient, compared to its efficacy on sensitive fungi.

On the other hand, a compound which has a different mode of action will not show any difference in efficacy on these various fungi.

In the presence of such phenomena of resistance to compounds which inhibit sterol synthesis, and in a most surprising and novel manner, it has been discovered that pyrimethanil has significantly greater efficacy for combating fungi which have developed such a resistance. Such an efficacy of a fungicidal compound, which is greater on strains resistant to certain compounds compared to the efficacy of this same compound on strains sensitive to these compounds, has never been reported. This is a unique, novel and entirely surprising fact.

Thus, a first aspect of the present invention concerns the use of pyrimethanil for combating the fungi responsible for *Cercospora* diseases in crops and which are resistant to compounds which inhibit sterol synthesis

In fact, the use of this compound on fungi which have developed such resistances has proved to be superior to the usual efficacy of pyrimethanil on such fungi sensitive to compounds which inhibit sterol synthesis. As a result, the use of pyrimethanil under conditions of resistance to compounds which inhibit sterol synthesis may make it possible to limit, or even reduce, these phenomena of resistance to these compounds. Such an effect of a fungicidal compound is also unique.

This novel use of pyrimethanil for the purpose of limiting, or even reducing, these phenomena of resistance of pathogenic fungi responsible for *Cercospora* diseases in plants to compounds which inhibit sterol synthesis constitutes another aspect of this invention.

Either of these uses of pyrimethanil according to the invention is indifferently described as use according to the invention. Both make it possible to protect plants, and in particular crops, against these diseases.

As compounds which inhibit sterol synthesis and which are capable of developing resistance phenomena in the pathogenic fungi responsible for *Cercospora* diseases, mention may be made, in a non-exhaustive manner, of compounds of the triazole type.

Among these compounds, the use according to the invention is particularly effective in combatting pathogens which have developed resistance to one or other of the following compounds: bitertanol, difenoconazole, propiconazole, tebuconazole.

In the context of the use of pyrimethanil according to the invention, the amounts of pyrimethanil conventionally used are in accordance with the usual amounts of this fungicidal compound for combating *Cercospora* diseases. Thus, amounts ranging from 20 to 800 g/ha, preferably ranging from 150 to 500 g/ha, have been shown to be particularly effective.

The use according to the invention is particularly advantageous for combatting the pathogenic agents responsible for *Cercospora* diseases, in particular *Mycosphaerella fijiensis* and *Mycosphaerella musicola,* preferably *Mycosphaerella fijiensis.*

The use according to the invention has been shown to be particularly advantageous for protecting banana crops, in particular plantain crops or sweet banana crops, preferably sweet banana crops. However, this use for protecting other crops is also part of the invention.

The invention is illustrated by the following example, which should in no way be considered as limiting the invention.

### Example of M. fijiensis ascospore treatment

The aim of the present example is to compare the sensitivity to pyrimethanil of strains "resistant" to compounds which inhibit sterol synthesis (in this case propiconazole) (samples 1 and 2) with the sensitivity to pyrimethanil of "natural" or "non-resistant" strains (samples 3 to 5).

### Preparation of M. fijiensis ascospore samples

Dried tissues of necrotic and burnt bananas, collected at various sites in Costa Rica, are incubated in plastic sacks with a piece of wetted paper. The incubation lasts 48 hours and is carried out at ambient temperature. After the incubation period, the samples are removed from the plastic sacks and cut up into small pieces of 1 to 2 cm. Pieces of various origins are thus prepared. 6 pieces of different origin are then attached to white paper. The paper to which the various samples have been attached is soaked in distilled water for 5 minutes and then immediately placed in a Petri dish containing 2% agar and pyrimethanil at various concentrations.

### Determination of the sensitivity of strains to treatment with pyrimethanil

The sensitivity of 5 ascospore samples originating from different sites and prepared as indicated above was tested using the "germination tube length" method. 5 concentrations of pyrimethanil were tested, twice: 0, 1, 10, 30 and 100 µg per ml. 60 ascospores were used for the tests at 10 and 30 µg per ml and 30 ascospores were used for the other concentrations. The concentrations causing a 50% decrease in the length of the germination tube (also called EC₅₀) were determined by statistical calculation based on data obtained.

The results are given in table 1 below :

**Table 1**

| **Sample reference** | **EC₅₀ (in ppm) with pyrimethanil treatment** | **EC₅₀ (in ppm) with propiconazole treatment** |
|---|---|---|
| Sample 1 | 15 | > 1 |
| Sample 2 | 4 | 0.85 |
| Sample 3 | 32 | 0.027 |
| Sample 4 | 60 | 0.010 |
| Sample 5 | 42 | 0.018 |

It appears that the EC₅₀ with pyrimethanil treatment is lower (increased efficacy) when the EC₅₀ with propiconazole treatment is higher (resistance phenomenon).

These results demonstrate that the use of pyrimethanil on fungi which have developed resistance to compounds which inhibit sterol synthesis was shown to be more effective than the normal use of pyrimethanil on fungi sensitive to compounds which inhibit sterol synthesis.

## Claims

1. Use of pyrimethanil for combatting the fungi responsible for *Cercospora* diseases in crops which are resistant to compounds which inhibit sterol synthesis.

2. Use of pyrimethanil for the purpose of limiting, or even reducing, the phenomena of resistance to compounds which inhibit sterol synthesis of pathogenic fungi responsible for *Cercospora* diseases in plants.

3. Use according to either of Claims 1 and 2 of pyrimethanil in an amount ranging from 20 to 800 g/ha.

4. Use according to Claim 3 of pyrimethanil in an amount ranging from 150 to 500 g/ha.

5. Use according to one or another of Claims 1 to 4 for protecting banana crops.

6. Use according to Claim 5 for protecting sweet banana crops.

7. Use according to Claim 5 for protecting plantain crops.

8. Use according to one or another of Claims 1 to 7 against *Mycosphaerella fijiensis.*

9. Use according to one or another of Claims 1 to 7 against *Mycosphaerella musicola.*

## Patentansprüche

1. Verwendung von Pyrimethanil für die Bekämpfung der für *Cercospora*-Krankheiten in Kulturen verantwortlichen Pilze, die gegenüber Verbindungen, die die Sterolsynthese hemmen, resistent sind.

2. Verwendung von Pyrimethanil zwecks Einschränkung oder sogar Verringerung der Resistenzerscheinungen gegenüber Verbindungen, die die Sterolsynthese von pathogenen Pilzen, die für *Cercospora*-Krankheiten in Pflanzen verantwortlich sind, hemmen.

3. Verwendung von Pyrimethanil in einer Menge von 20 bis 800 g/ha nach Anspruch 1 bzw. 2.

4. Verwendung von Pyrimethanil in einer Menge von 150 bis 500 g/ha nach Anspruch 3.

5. Verwendung nach einem der Ansprüche 1 bis 4 für den Schutz von Bananenkulturen.

6. Verwendung nach Anspruch 5 zum Schutz von Obstbananenkulturen.

7. Verwendung nach Anspruch 5 zum Schutz von Mehlbananenkulturen.

8. Verwendung nach einem der Ansprüche 1 bis 7 gegen *Mycosphaerella fijiensis.*

9. Verwendung nach einem der Ansprüche 1 bis 7 gegen *Mycosphaerella musicola.*

## Revendications

1. Utilisation du pyrimethanil pour la lutte contre les champignons responsables des cercosporioses des cultures et résistant aux composés inhibiteurs de la synthèse des stérols.

2. Utilisation du pyrimethanil en vue de circonscrire voire de faire reculer les phénomènes de résistance aux composés inhibiteurs de la synthèse des stérols de champignons pathogènes responsables des cercosporioses des plantes.

3. Utilisation selon l'une ou l'autre des revendications 1 et 2 d'une quantité de pyrimethanil allant de 20 à 800 g/ha.

4. Utilisation selon la revendication 3 d'une quantité de pyrimethanil allant de 150 à 500 g/ha.

5. Utilisation selon l'une ou l'autre des revendications 1 à 4 pour la protection des cultures bananières.

6. Utilisation selon la revendication 5 pour la protection des cultures de bananes douces.

7. Utilisation selon la revendication 5 pour la protection des cultures de bananes plantains.

8. Utilisation selon l'une ou l'autre des revendications 1 à 7 contre *Mycosphaerella fijiensis.*

9. Utilisation selon l'une ou l'autre des revendications 1 à 7 contre *Mycosphaerella musicola.*
